# EUROPEAN PATENT SPECIFICATION

(11) **EP 1 203 702 B1**
(45) Date of publication and mention of the grant of the patent: **05.01.2005**
(21) Application number: 00123776.7
(22) Date of filing: 04.11.2000
(51) Int. Cl.: B60R 21/16, B60R 21/00

(54) **Safety system with a plurality of expandable and releasable protective elements**
Sicherheitsvorrichtung mit einer Vielzahl von expandierbaren und loslassbaren Schutzelementen
Dispositif de sécurité avec une pluralité d'éléments de protection expansibles et libérables

(43) Date of publication of application: 08.05.2002
(73) Proprietor: Ford Global Technologies, LLC, Dearborn, Michigan 48126 (US)
(72) Inventor: Forssell, Jonas, 412 56 Göteborg (SE); Wedel, Martin, 412 57 Göteborg (SE); Weiman, Martin, 414 82 Göteborg (SE); Ivarsson, Jan, 42737 Billdal (SE)
(74) Representative: Lindberg, Klas Valter Bo

(56) References cited:
- US-A- 3 309 109

## Description

### Technical field of invention

The present invention relates to a safety system for protecting objects in a vehicle from possible damage due to sudden impact thereon.

The invention also relates to a method for protecting objects in a vehicle.

### Technical background

Inflatable cushion systems commonly referred to as air bag systems have been used in the past to protect both the operator of the vehicle and passengers. Systems for the protection of the vehicle operator have typically been mounted in the steering column of the vehicle and have utilised cushion constructions directly deployable towards the driver.

It is a well-known issue of modern conventional airbag technology for especially vehicles that these prior art airbag systems only provide optimal protection for a properly positioned operator in specific impact situations. There is a need to improve current airbag technology in order to cover also other situations.

Inflatable cushions for use in the protection of passengers against frontal or side impacts must generally have a more complex configuration since the position of a vehicle passenger may not be well defined and greater distance may exist between the passenger and the surface of the vehicle against which that passenger might be thrown in the event of a collision.

Current direction on improving these systems is adding more bags and advanced control systems. The more advanced the system gets the more important it is to adapt the system to the actual operator of the vehicle and the passengers. It is not only the position of the objects in the vehicle but also their size and shape that needs to be taken into account. Very sophisticated sensors are typically placed in advanced vehicle compartments in order to provide all this information to the air bag system. This information is used in combination with information from the impact sensors of the vehicle to provide best possible protection of the objects in case of impact on the vehicle.

Impact situations are generally very complex and a multitude of different parameters, in addition to the above outlined, actually need to be determined in order for the conventional air bag systems to provide accurate protection in a specific case. In order to improve this technique the conventional air bag systems become very complex.

However, a second issue with a conventional air bag system is that the bag when triggered almost instantly is provided with a high energy content. This energy provides a force that may cause serious damage on an object in the vehicle especially if the force is concentrated on a small area of the object. This is especially a problem if the objects in the vehicle such as children or older people are especially sensitive to sudden impact.

US-A-3,309,109 (Baughman) discloses an impact protective device, comprising a large plurality of free volumetrically expandable resilient elements, said elements having a total volume at atmospheric pressure conditions which is many times the internal volume of a vessel in which the elements are fitted but being compressed by gas pressure within said vessel to conform to the volume of said vessel. The compression of the gas and the elements within the vessel being sufficient that upon release of a closure said elements are expelled from said vessel". The intention seems to be to fill a compartment of a vehicle in case of impact, utilizing a change in surrounding pressure of the resilient elements, during which change in pressure the resilient members would resume it's original size and shape. For some reason the use of resilient elements that is intended to resume the shape in case of sudden impact has not yet become common in the vehicle industry and hence there is a need for improvement.

The overall problem for conventional air bag technology is thus to provide protection in a system of reasonable complexity for passengers in different impact situations independent of, for example, the passengers' shape, size, weight, position and physical condition.

### Summary of invention

The object of the present invention is to provide a safety system that overcomes the above issues, and makes it possible to provide a system for cushioning a movable object within a compartment against injury from sudden impact without directing too much of the impact energy on a specific location of the movable object. It is also an object to provide a system for cushioning a movable object within a housing against damage from sudden impact.

A further object is to provide a safety device providing cushioning about a movable object in a compartment or housing, which is effective regardless of the shape, size, weight or location of the object.

It is still a further object to provide a safety device which achieves these and other objects but is simple to manufacture, install in a vehicle and yet not overly complex.

These and other objects are achivied by a safety system according to claim 1 and a method according to claim 14.

According to the invention there is provided a safety system for protecting objects in a vehicle from possible damage due to sudden impact thereon, said safety system comprising a plurality of protective elements arranged to be expandable and releasable from an original position, said protective elements being arranged to expand by means of inflation.

The effects of injury from sudden impact on occupants in a vehicle in case of an automobile accident would be less if a plurality of protective elements were discharged around an object in the vehicle in order to dampen the sudden impact. A sudden accelerating or decelerating force applied to an object over a large surface area thereon will tend to have a less severe effect and will tend to cause less damage than if the same force is concentrated on a small area of the object. The total energy content from a conventional air bag type is divided into a plurality of protective elements.

This arrangement is also effective regardless of the shape, size, weight or location of the object due to the flexibility of the plurality of protective elements according to the invention.

This makes the positioning of a group of non-activated protective elements on a panel or similar in the vehicle easy since it does not require a lot of space. As long as they are not being triggered the protective elements are about the size of a pea which makes such a group easy to place in the vehicle. This arrangement also provides a rapid expansion and discharge of the system, which is crucial in case of a sudden impact.

In a preferred embodiment of the invention the protective elements are arranged to fill a volume in a compartment of said vehicle. The flexibility of the invention makes it possible to provide different sections of the vehicle with protective elements in order to obtain an efficient course of the filling of the actual vehicle compartment. It is also possible to provide other sections, such as the engine housing of the vehicle with protective elements to achieve better protection and less damage on objects of the vehicle. Consequently, it is possible to provide e.g. a door structure or a luggage compartment with the protective elements according to the invention.

According to the invention at least one of said protective elements comprises a trigger connected to at least one impact sensor. Another advantage with the present invention is that a conventional impact sensor system may be used in order to transmit the necessary information and possibly activate the protective elements. In an embodiment of the invention the trigger is electronically connected to at least one impact sensor.

As mentioned the protective elements are arranged on a panel element in their original position. As an alternative the protective elements are directly connected to one another in their original position. The protective elements may then be placed at selected areas in the compartment.

The flexibility of the system according to the invention provides the possibility of the protective elements to be arranged in combination with other safety systems for protecting objects in said vehicle from damage due to sudden impact.

In a preferred embodiment of the invention said protective elements are each substantially spherical when expanded. This spherical shape of the elements allows a high coefficient of fullness of the volume in the compartment.

Preferably, each said protective element has at least a permeable expandable cover, said cover being preferably permeable to inflating media in order to absorb impact energy after being inflated. By making the cover permeable to inflating media, especially in case of impact, the risk for injuries or damage of the objects is decreased. This is because the elasticity of the expanded protective elements is minimised due to deflation during impact from the object. The plurality of released free-moving protective elements also provide damping due to the fact that the elements are movable in relation to one another and could hence be easily rearranged once released.

Serious injuries caused by the objects bouncing back from the protective element can thus be avoided.

The protective element has a core comprising a gas generating device. The gas generating device will generate inflating media to the protective elements in accordance with prior art in conventional airbag technology.

The protective element thus has an expandable cover, said cover being made of a rubber like material or a polymer. A silicone-based rubber like material is considered specifically appropriate, due to the fact that the expansion of the protective element takes place under heat generation and this material is both heat resistant and expandable.

It is a further object for the present invention to provide a method for protecting objects in a vehicle from possible damage due to sudden impact thereon, by releasing a plurality of protective elements, expanding said protective elements by trigging at least one protective element with a signal from an impact sensor in order to fill a volume of the compartment in said vehicle.

Preferably, said trigging signal initiates a chain reaction comprising the steps of one protective element expanding by being triggered, the pressure from the first expanding element causing its neighbouring protective elements to expand. Preferably a pressure sensitive powder is provided between the canister and the expandable cover. The pressure from an expanding element is triggering this pressure sensitive powder in neighbouring elements causing an explosion, said explosion initiating an inflation of the neighbouring elements. During the expansion of the element an increased pressure on the surrounding elements occurs and this increased pressure allows the element to be released from the original position.

Another preferred method of performing the filling of the compartment is that by trigging each said protective element by a separate trigger.

The above described embodiments of the elements in the safety system of the invention are given by way of example only and the element according to the invention can be designed in a number of ways, within the scope of the invention.

### Brief description of the drawings

In order that the invention may be more readily understood, and so that further features thereof may be appreciated, the invention will now be described, by way of example, with reference to the accompanying drawings in which:
Fig 1 is a part of the inflatable elements mounted together on a panel or the like according to a preferred embodiment of the invention.
Fig 2 is a cross section of an inflatable element according to the present invention.
Fig 3a is a schematic view of a personal car equipped with a safety system according to the invention and shows the initial trigging of a protective element in a vehicle.
Fig 3b is a schematic view of a personal car equipped with a safety system according to the invention and shows inflatable elements expanding and discharging into the compartment actuated by a sudden impact.
Fig 3c is a schematic view of a personal car filled with protective elements according to the invention.

### Detailed description of the preferred embodiment

The embodiment of the invention that will be described in the following is related to a safety system for a vehicle.

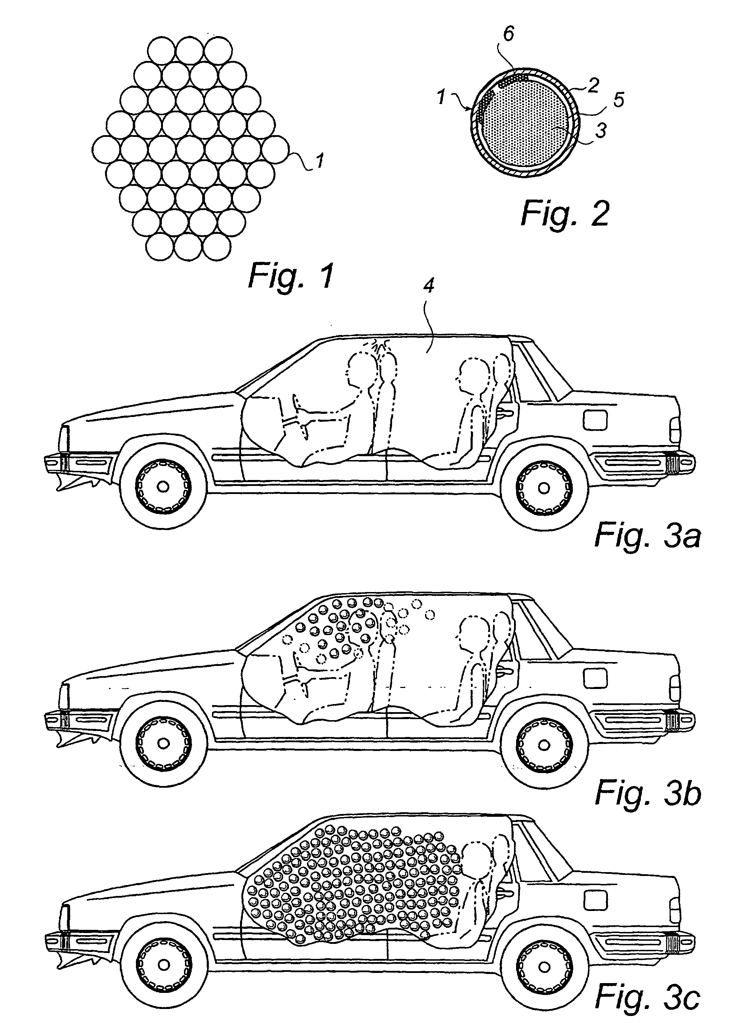

Referring to figure 1 of the accompanying drawings, a group comprising a plurality of protective elements 1 is arranged on a panel or similar. In this condition each protective element 1 is about the size of a pea. In a preferred embodiment of the invention at least one protective element 1 in said group is provided with a triggering mechanism.

Figure 2 illustrates an embodiment of a pea sized spherical protective element 1 with a cover 2 and a core 3. The cover 2 consists of a rubber like material or a polymer, which has the ability to expand about 10 times relative to its original size. The cover material should also include some permeability so that deflation of content media from the protective element is made possible at least in case of a sudden impact. The core 3 comprises a pressure sensitive gas generative material in a solid state, which will explode when a trigger pressure is reached. When this trigger pressure is reached, a friendly gas (like nitrogen) will be generated and expand the cover 2 into an approximate size of an orange or greater. An example of a gas generative material is potassium iodide.

The core 3 may comprise a micro inflator canister 5, said canister being surrounded by an expandable cover 2. Said canister 5 has at least one opening through which the inflating media, when the element is activated, may be let out of the canister 5 causing a surrounding cover 2 to expand.

The protective element 1 thus has an expandable cover 2, said cover 2 being made of a rubber like material or a polymer. A silicone-based rubber like material is considered specifically appropriate, due to the fact that the expansion of the protective element 1 takes place under heat generation and this material is both heat-resistant and expandable.

It is a further object for the present invention to provide a method for protecting objects in a vehicle from possible damage due to sudden impact thereon, by releasing a plurality of protective elements 1, expanding said protective elements by trigging at least one protective element with a signal from an impact sensor in order to fill a volume of the compartment in said vehicle. The trigging signal or impulse is preferably given as an electric impulse to the safety system.

Preferably, said trigging signal initiates a chain reaction comprising the steps of one protective element 1 expanding by being triggered, the pressure from the first expanding element 1 causing its neighbouring protective elements 1 to expand. During this chain reaction the protective elements 1 are also being released from their original position since the strength of the attachment to the original position is lower than the initiated pressure. Preferably a first pressure sensitive powder 6 is provided gas generative device andthe expandable cover. The pressure from a neighbouring expanding element 1 is triggering this pressure sensitive powder 6 causing an explosion, said explosion triggering the gas generative device in the core 3 initiating an explosion and starting the inflation of the element 1. During the expansion of the element 1 the element 1 is being released from its original position.

Another preferred method of performing the filling of the compartment is that by trigging each said protective element 1 by a separate trigger. The expanding protective elements rapidly start filling a volume in the vehicle. Preferably the whole process of filling such a volume is performed within a period of thousandths of seconds from the initiating impact.

In an alternative embodiment of the invention separate triggers may trigger each protective element independently of other elements. This will provide a massive discharge of protective elements in the compartment.

Referring now to figures 3a-c illustrating a vehicle provided with the above outlined safety system and wherein the reaction is illustrated with a series of events. In figure 3a the protective elements are being activated by a signal or similar from an impact sensor of conventional type. This signal starts a trigger in connection with at least one protective element 1 within a group consisting of protective elements mounted on a panel or similar.

In figure 3b the protective elements are being released and are rapidly filling up a volume in the compartment of the vehicle. In figure 3c the vehicle filled with expanded protective elements.

The location of a group of protective elements 1 mounted on a panel in the vehicle can be chosen as desired depending on the type of vehicle. Preferably the protective elements can be located behind the dash or under the roof to give a few examples. Different groups can be placed on different areas in the vehicle compartment allowing the whole compartment to be covered if desired.

The flexibility of the protective system makes it possible to combine the protective elements with other conventional safety systems as desired.

It is a further advantage of the present invention that conventional impact sensors can be used to provide the necessary information to the safety system in case of sudden impact. The inventive idea is not dependent on any specific impact detecting system and it is a great advantage that it easily can be adapted to almost any kind of sensor system provided the sensor system has the ability to initiate a trigging mechanism of the present invention.

By sudden impact it is here and in the following understood more or less extreme situations were there is a risk for injury or damage depending on an accident or retardation.

The present invention should not be considered as being limited to the above-described preferred embodiment, but rather includes all possible variations covered by the scope defined by the appended claims.

It is thus to be appreciated that the above described material considered suitable for the protective elements need not be chosen from the previous described materials as they are given only as a way of example.

The exact shape and size of the protective elements can also be modified in order to meet specific requirements and are in the above only given as a guidance.

## Claims

1. Safety system for protecting objects in a vehicle from possible damage due to sudden impact thereon, wherein
said safety system comprises a plurality of protective elements (1) arranged to be expandable and releasable from an original position, **characterised in that** said protective elements (1) being arranged to expand by inflation.

2. Safety system according to claim 1, wherein
said protective elements (1) are arranged to fill a volume in a compartment of said vehicle.

3. Safety system according to any of the preceding claims, wherein at least one of said protective elements (1) comprises a trigger connected to at least one impact sensor.

4. Safety system according to claim 3, wherein said trigger is electronically connected to at least one impact sensor.

5. Safety system according to claim 1-4, wherein said protective elements (1) are arranged on a panel element in their original position.

6. Safety system according to claim 1-4, wherein said protective elements (1) are directly connected to one another in their original position.

7. Safety system according to any of the preceding claims, wherein said safety system is arranged in combination with other safety systems for protecting objects in said vehicle from damage due to sudden impact.

8. Safety system according to any of the preceding claims, wherein said protective element (1) is substantially spherical when expanded.

9. Safety system according to any of the preceding claims, wherein said protective element (1) has an expandable cover (2) of a silicone based rubber like material.

10. Safety system according to any of the preceding claims, wherein said protective element (1) has an expandable cover (2) of polymer (TPE).

11. Safety system according to any of the preceding claims, wherein said protective element (1) has at least an expandable cover (2), said cover (2) being permeable to inflating media in order to absorb impact energy after being inflated.

12. Safety system according to any of the preceding claims, wherein said protective element (1) has a core (3) comprising a gas releasing device.

13. Vehicle comprising a safety system according to any of the preceding claims.

14. Method for protecting objects in a vehicle from possible damage due to sudden impact thereon, said method comprising the steps of, releasing a plurality of protective elements (1), and being **characterised by** expanding said protective elements (1) by triggering at least one protective element (1) with a signal from an impact sensor in order to fill a volume of the compartment in said vehicle and wherein the step of expanding said protective elements (1) is caused by inflating said protective elements (1).

15. Method according to claim 14, wherein said trigging signal initiating a chain reaction comprising the steps of one protective element (1) expanding by being triggered, causing its neighbouring protective elements (1) to expand.

16. Method according to claim 14, wherein the triggering of each said protective elements (1) is initiated by a separate trigger.

17. Method according to claim 14-16, wherein said protective element has an expandable cover (2), said cover (2) being permeable allowing expanding media to leave in order to cause deflation after absorbing impact energy.

## Patentansprüche

1. Sicherheitsvorrichtung zum Schutz von Objekten in einem Fahrzeug vor möglichem Schaden aufgrund eines plötzlichen Aufpralls darauf, wobei die Sicherheitsvorrichtung eine Vielzahl von Schutzelementen (1) umfasst, die expandierbar und aus einer ursprünglichen Position loslassbar angeordnet sind, **dadurch gekennzeichnet, dass** die Schutzelemente (1) zum Expandieren durch Aufblasen angeordnet sind.

2. Sicherheitsvorrichtung nach Anspruch 1, wobei die Schutzelemente (1) zum Füllen eines Volumens in einem Abteil des Fahrzeugs angeordnet sind.

3. Sicherheitsvorrichtung nach einem der vorhergehenden Ansprüche, wobei zumindest eines der Schutzelemente (1) einen Auslöser umfasst, der mit zumindest einem Aufprallsensor verbunden ist.

4. Sicherheitsvorrichtung nach Anspruch 3, wobei der Auslöser elektronisch mit zumindest einem Aufprallsensor verbunden ist.

5. Sicherheitsvorrichtung nach einem der Ansprüche 1 bis 4, wobei die Schutzelemente (1) in ihrer ursprünglichen Position an einem Tafelelement angeordnet sind.

6. Sicherheitsvorrichtung nach einem der Ansprüche 1 bis 4, wobei die Schutzelemente (1) in ihrer ursprünglichen Position direkt miteinander verbunden sind.

7. Sicherheitsvorrichtung nach einem der vorhergehenden Ansprüche, wobei die Sicherheitsvorrichtung in Kombination mit anderen Sicherheitsvorrichtungen zum Schutz von Objekten in dem Fahrzeug vor möglichem Schaden aufgrund eines plötzlichen Aufpralls angeordnet ist.

8. Sicherheitsvorrichtung nach einem der vorhergehenden Ansprüche, wobei das Schutzelement (1) im Wesentlichen kugelförmig ist, wenn es expandiert ist.

9. Sicherheitsvorrichtung nach einem der vorhergehenden Ansprüche, wobei das Schutzelement (1) eine expandierbare Umhüllung (2) aus einem silikonbasierten gummiähnlichen Material aufweist.

10. Sicherheitsvorrichtung nach einem der vorhergehenden Ansprüche, wobei das Schutzelement (1) eine expandierbare Umhüllung (2) aus Polymer (TPE) aufweist.

11. Sicherheitsvorrichtung nach einem der vorhergehenden Ansprüche, wobei das Schutzelement (1) zumindest eine expandierbare Umhüllung (2) aufweist, wobei die Umhüllung (2) für Aufblasmedien durchlässig ist, um Aufprallenergie nach dem Aufblasen aufzufangen.

12. Sicherheitsvorrichtung nach einem der vorhergehenden Ansprüche, wobei das Schutzelement (1) einen Kern (3) aufweist, der ein Gasfreigabegerät umfasst.

13. Fahrzeug, umfassend eine Sicherheitsvorrichtung nach einem der vorhergehenden Ansprüche.

14. Verfahren zum Schutz von Objekten in einem Fahrzeug vor möglichem Schaden aufgrund eines plötzlichen Aufpralls darauf, wobei das Verfahren die Schritte des Loslassens einer Vielzahl von Schutzelementen (1) umfasst und **gekennzeichnet ist durch** Expandieren der Schutzelemente (1) **durch** Auslösen von zumindest einem Schutzelement (1) mit einem Signal von einem Aufprallsensor, um ein Volumen des Abteils in dem Fahrzeug zu füllen, und wobei der Schritt des Expandierens der Schutzelemente (1) **durch** Aufblasen der Schutzelemente (1) bewirkt wird.

15. Verfahren nach Anspruch 14, wobei das Auslösesignal eine Kettenreaktion einleitet, wobei das Expandieren von einem Schutzelement (1) dadurch, dass es ausgelöst wird, bewirkt, dass seine benachbarten Schutzelemente (1) expandieren.

16. Verfahren nach Anspruch 14, wobei das Auslösen für jedes Schutzelement (1) von einem separaten Auslöser eingeleitet wird.

17. Verfahren nach einem der Ansprüche 14 bis 16, wobei das Schutzelement eine expandierbare Umhüllung (2) aufweist, wobei die Umhüllung (2) durchlässig ist, um es Expansionsmedien zu ermöglichen zu entweichen, um nach dem Auffangen von Aufprallenergie eine Entleerung zu bewirken.

## Revendications

1. Système de sécurité pour protéger dans un véhicule des objets de dommages possibles dus à un impact soudain, dans lequel ledit système de sécurité comprend une pluralité d'éléments de protection (1) agencés pour être dilatables et libérables d'une position d'origine, **caractérisé en ce que** lesdits éléments de protection (1) sont agencés pour s'étendre par gonflement.

2. Système de sécurité selon la revendication 1, dans lequel lesdits éléments de protection (1) sont disposés pour remplir un volume dans un compartiment dudit véhicule.

3. Système de sécurité selon l'une des revendications précédentes, dans lequel au moins l'un des éléments de protection (1) comprend un déclencheur connecté à au moins un capteur d'impact.

4. Système de sécurité selon la revendication 3, dans lequel ledit déclencheur est connecté électroniquement à au moins un capteur d'impact.

5. Système de sécurité selon la revendication 1 à 4, dans lequel lesdits éléments de protection (1) sont agencés sur un élément formant panneaux dans leur position d'origine.

6. Système de sécurité selon les revendications 1 à 4, dans lequel lesdits éléments de protection (1) sont directement connectés entre eux dans leur position d'origine.

7. Système de sécurité selon l'une des revendications précédentes dans lequel ledit système de sécurité est agencé en association avec d'autres systèmes de sécurité pour protéger des objets dans ledit véhicule des dommages provoqués par un impact soudain.

8. Système de sécurité selon l'une des revendications précédentes dans lequel lesdits éléments de protection (1) sont essentiellement sphériques quand ils sont dilatés.

9. Système de sécurité selon l'une des revendications précédentes dans lequel lesdits éléments de protection (1) présentent une couverture extensible (2) de caoutchouc à base de silicone en tant que matériau.

10. Système de sécurité selon l'une des revendications précédentes dans lequel lesdits éléments de protection (1) présentent une couverture extensible (2) de polymère (TPE).

11. Système de sécurité selon l'une des revendications précédentes dans lequel lesdits éléments de protection (1) ont au moins une couverture extensible (2), ladite couverture (2) étant perméable pour gonfler le fluide afin d'absorber l'énergie d'impact après avoir été gonflé.

12. Système de sécurité selon l'une des revendications précédentes dans lequel lesdits éléments de protection (1) présente un coeur (3) comprenant un dispositif de libération de gaz.

13. Véhicule comprenant un système de sécurité selon l'une des revendications précédentes.

14. Procédé pour la protection d'objets dans un véhicule de dommages dus à un impact soudain, ledit procédé comprenant les étapes de libérer une pluralité d'élément de protection (1) et étant **caractérisé par** la dilatation d'au moins un élément de protection (1) par déclenchement d'au moins un élément de protection (1) avec un signal provenant d'un capteur d'impact afin de remplir un volume du compartiment dans ledit véhicule et dans lequel l'étape de dilatation desdits éléments de protection (1) est provoquée par gonflement desdits éléments de protections (1).

15. Procédé selon la revendication 14, dans lequel ledit signal de déclenchement initiant une réaction en chaîne comprenant les étapes de dilatation de l'élément de protection (1) en étant déclenché pour amener ses éléments de protection voisins (1) à se dilater.

16. Procédé selon la revendication 14, dans lequel le déclenchement de chacun desdits éléments de protection (1) est initié par un déclencheur séparé.

17. Procédé selon les revendications 14 à 16 dans lequel ledit élément protecteur présente une couverture extensible (2), ladite couverture (2) étant perméable permettant au fluide en dilatation de sortir afin de provoquer le dégonflement après avoir absorbé l'énergie d'impact.
